# EUROPEAN PATENT SPECIFICATION

(11) **EP 3 135 893 B1**
(45) Date of publication and mention of the grant of the patent: **14.10.2020**
(21) Application number: 16183414.8
(22) Date of filing: 09.08.2016
(51) Int. Cl.: F02M 25/08, F02D 41/00, B60K 15/035, B60K 15/03

(54) **EVAPORATED FUEL TREATMENT DEVICE**
VORRICHTUNG ZUR BEHANDLUNG VON VERDUNSTETEM KRAFTSTOFF
DISPOSITIF DE TRAITEMENT DE CARBURANT ÉVAPORÉ

(30) Priority: 25.08.2015 JP 2015166105
(43) Date of publication of application: 01.03.2017
(73) Proprietor: Toyota Jidosha Kabushiki Kaisha, Toyota-shi, Aichi-ken, 471-8571 (JP)
(72) Inventor: SHIMOKAWA, Shinji, Aichi-Ken, Aichi 471-8571 (JP); AKITA, Tatsuhiko, Aichi-Ken, Aichi 471-8571 (JP); NISHIMURA, Yuusaku, Aichi-Ken, Aichi 471-8571 (JP); FUKUI, Keita, Aichi-Ken, Aichi 471-8571 (JP)
(74) Representative: D Young & Co LLP

(56) References cited:
- JP-A- 2003 035 214
- US-A- 5 123 459
- US-A1- 2004 089 275
- US-A1- 2014 102 419

## Description

### Technical Fields

The present invention relates to an evaporated fuel treatment device.

### Background Art

Conventionally, an evaporated fuel treatment device is known, which treats evaporated fuel generated in a fuel tank of an internal combustion engine mounted on a vehicle (for example, see Patent Document 1).

Such an evaporated fuel treatment device is configured to: temporarily collect (adsorb and hold) evaporated fuel generated in the fuel tank in a canister; and introduce (purge) the evaporated fuel in the canister to an intake system of the internal combustion engine using a negative pressure in the intake system of the internal combustion engine.

Specifically, the evaporated fuel treatment device includes: a fuel tank that stores fuel for the internal combustion engine; a canister that collects evaporated fuel generated in the fuel tank; a vapor passage that connects the fuel tank to the canister; a purge passage that connects the canister to an intake system of the internal combustion engine; and an air passage that communicates the canister with atmosphere.

An inlet pipe for feeding fuel is disposed in the fuel tank. A cap is removably attached to a fuel feed opening of the inlet pipe. Outside the cap, a lid is provided so as to cover the cap and the fuel feed opening. The lid is configured to open when a lid switch is operated. Specifically, when the lid switch is operated, a signal associated with the operation is input to an ECU. Thus, the ECU instructs a lid opening/closing mechanism to open the lid.

A sealing valve is disposed in the vapor passage so as to open/close the vapor passage. A purge control valve is disposed in the purge passage so as to control an amount of the evaporated fuel to be introduced to the intake system. The sealing valve and the purge control valve are both normally closed valves, and valve opening timings are controlled by the ECU.

A fill-up regulating valve and a cutoff valve are disposed at a lower end (end portion inside the fuel tank) of the vapor passage. The fill-up regulating valve is configured to open when a fuel level in the fuel tank is lower than an upper limit (fill-up level) and to close when the fuel level rises up to the upper limit. The cutoff valve is disposed at a position higher than the fill-up regulating valve. The cutoff valve is configured to open normally and to close when, for example, a vehicle turns over on its side.

In the above evaporated fuel treatment device, the sealing valve is closed when the vehicle is stopped. Thus, the fuel tank is sealed. Also, at the time of fueling, when a user operates the lid switch, the signal associated with the operation is input to the ECU so that the sealing valve is opened by the ECU. For this reason, the evaporated fuel in the fuel tank flows into the canister so as to be collected, accordingly, an internal pressure of the fuel tank is released. The sealing valve is maintained in an open state until the fueling is completed. When the internal pressure in the fuel tank is reduced close to the atmospheric pressure, the ECU outputs the instruction to the lid opening/closing mechanism to open the lid. Thus, the lid is opened and the fueling can be carried out.

Then, the user removes the cap from the fuel feed opening of the inlet pipe so as to insert a fueling gun into the fuel feed opening. While the fueling gun is being inserted into the fuel feed opening, fuel is discharged from the fueling gun so as to be introduced to the fuel tank through the inlet pipe. At this time, since the sealing valve is opened, the evaporated fuel during fueling is collected in the canister. Then, the fuel level in the fuel tank rises up to the upper limit (fill-up level), and the fill-up regulating valve is closed so that the internal pressure in the fuel tank is increased. Thus, the inlet pipe is filled with the fuel up to the vicinity of the fuel feed opening, which results in an automatic stop function of the fueling gun being executed so as to stop fueling from the fueling gun.
JP 2003 035214 A discloses an evaporated fuel control device for fuel tank.
US 2004/089275 A1 discloses an evaporated fuel treatment device for internal combustion engine.

### Prior Art Document

### Patent Document

[Patent Document 1] JP 2004-156497 A

### Summary of Invention

### Problem to Be Solved by Invention

However, in the above-described conventional evaporated fuel treatment device, since the sealing valve is opened during fueling, the cutoff valve is opened even when the fill-up regulating valve is closed. Thus, after the fueling is automatically stopped due to increase of the internal pressure in the fuel tank, the increased internal pressure in the fuel tank is released to the canister via the cutoff valve. Like this, when the internal pressure in the fuel tank is reduced, the fuel level in the vicinity of the fuel feed opening lowers, which allows additional fueling. Thus, when the fuel is additionally fed, the fed fuel amount may exceed a specified capacity, which results in excessive fueling.

For this reason, when there is no obligation to collect the evaporated fuel during fueling (i.e., the ORVR control is not required), it is conceivable that the sealing valve is closed during fueling. With such a configuration, it is possible to prevent the internal pressure in the fuel tank from being released to the canister after the fueling is stopped.

Meanwhile, after the lid switch is operated, the vehicle may be left for a while without the fueling operation being sequentially performed. In this case, when the sealing valve is being closed, the internal pressure in the fuel tank may be increased. Then, if the cap is removed from the fuel feed opening of the inlet pipe while the internal pressure in the fuel tank is high, there may be a problem that a bad smell (fuel smell) is generated due to the evaporated fuel discharged from the fuel feed opening, because the internal pressure is released from the fuel feed opening.

The present invention was made in consideration of the above circumstances. An object of the present invention is to provide an evaporated fuel treatment device capable of preventing excessive fueling while suppressing increase of an internal pressure in a fuel tank when a cap is removed from a fuel feed opening of an inlet pipe by a user.

### Means for Solving Problem

An evaporated fuel treatment device according to the present invention includes: a fuel tank configured to store fuel for an internal combustion engine; a canister configured to collect evaporated fuel generated in the fuel tank; an evaporated fuel passage configured to connect the fuel tank to the canister; a valve member disposed in the evaporated fuel passage and configured to open/close the evaporated fuel passage; an inlet pipe disposed in the fuel tank and configured to feed the fuel; a breather pipe configured to communicate the fuel tank with the inlet pipe; a tank internal pressure sensor configured to detect an internal pressure of the fuel tank; a control unit configured to control opening/closing of the valve member; and an operation unit to be operated when a fueling operation is performed. When the operation unit is operated and fueling control is started, the control unit opens the valve member so as to release the internal pressure of the fuel tank, and closes the valve member after release of the internal pressure in the fuel tank. In the evaporated fuel treatment device, an upper space disposed above a fuel level in the fuel tank is sealed when the fuel level in the fuel tank reaches the breather pipe during feeding the fuel to the fuel tank through the inlet pipe while the valve member is being closed. Also, after the valve member is closed during the fueling control, the control unit opens the valve member so as to release the internal pressure in the fuel tank and then closes the valve member after release of the internal pressure in the fuel tank, under a condition that the internal pressure in the fuel tank is equal to or more than a first predetermined value and furthermore a rising speed of the internal pressure in the fuel tank is less than a second predetermined value. Furthermore, after the valve member is closed during the fueling control, the control unit maintains a closed state of the valve member under a condition that the internal pressure in the fuel tank is equal to or more than the first predetermined value and furthermore the rising speed of the internal pressure in the fuel tank is equal to or more than the second predetermined value.

As described above, when the operation unit is operated and the fueling control is started, the internal pressure in the fuel tank is released by opening the valve member. After the internal pressure in the fuel tank is released, the valve member is closed. Thus, when the fuel level in the fuel tank reaches the breather pipe during fueling, the upper space of the fuel tank can be sealed. Accordingly, after the fueling is stopped, the internal pressure in the fuel tank, which has been increased by the fueling, can be maintained. Therefore, the fuel level in the vicinity of the fuel feed opening is not likely to lower, which results in difficulty in the additional fueling, thereby, the excessive fueling can be prevented. Also, after the valve member is closed during the fueling control, the valve member is temporarily opened so as to release the internal pressure under the condition that the internal pressure in the fuel tank is equal to or more than the first predetermined value and furthermore the rising speed of the internal pressure in the fuel tank is less than the second predetermined value. Thus, when the internal pressure is slowly increased due to the vehicle being left after the operation unit is operated, the internal pressure can be released via the canister. Therefore, it is possible to prevent the internal pressure in the fuel tank from being increased when the user removes the cap from the fuel feed opening of the inlet pipe. Furthermore, after the valve member is closed during the fueling control, the closed state of the valve member is maintained under the condition that the internal pressure in the fuel tank is equal to or more than the first predetermined value and furthermore the rising speed of the internal pressure in the fuel tank is equal to or more than the second predetermined value. Thus, when the internal pressure is suddenly increased due to the fueling, it is possible to maintain the upper space of the fuel tank in the sealing state.

In the above-described evaporated fuel treatment device, the control unit may determine that the internal pressure in the fuel tank has been released when the internal pressure in the fuel tank is reduced close to an atmospheric pressure by opening the valve member.

With the above configuration, it is possible to easily determine whether the internal pressure in the fuel tank has been released or not.

In the above-described evaporated fuel treatment device, the control unit may determine that the internal pressure in the fuel tank has been released when an opening time of the valve member is equal to or more than a third predetermined value.

With the above configuration, it is possible to easily determine whether the internal pressure in the fuel tank has been released or not.

### Advantageous Effects of Invention

With the evaporated fuel treatment device of the present invention, it is possible to prevent excessive fueling while suppressing increase of the internal pressure in the fuel tank when the cap is removed from the fuel feed opening of the inlet pipe by a user.

### Brief Description of Drawings

[FIG. 1]

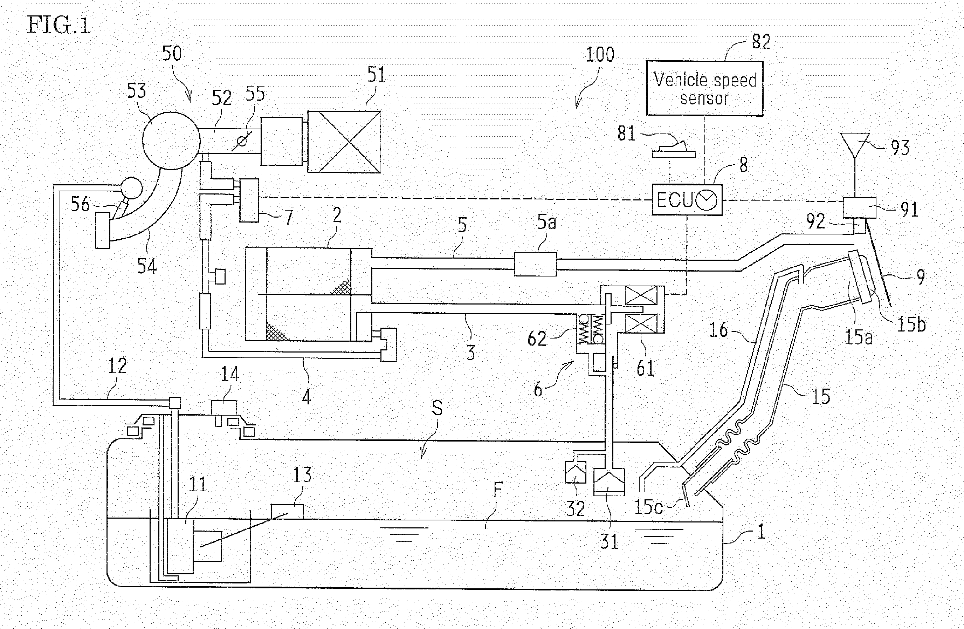

   FIG. 1 is a schematic configuration diagram for explaining an evaporated fuel treatment device according to one embodiment of the present invention.
[FIG. 2]

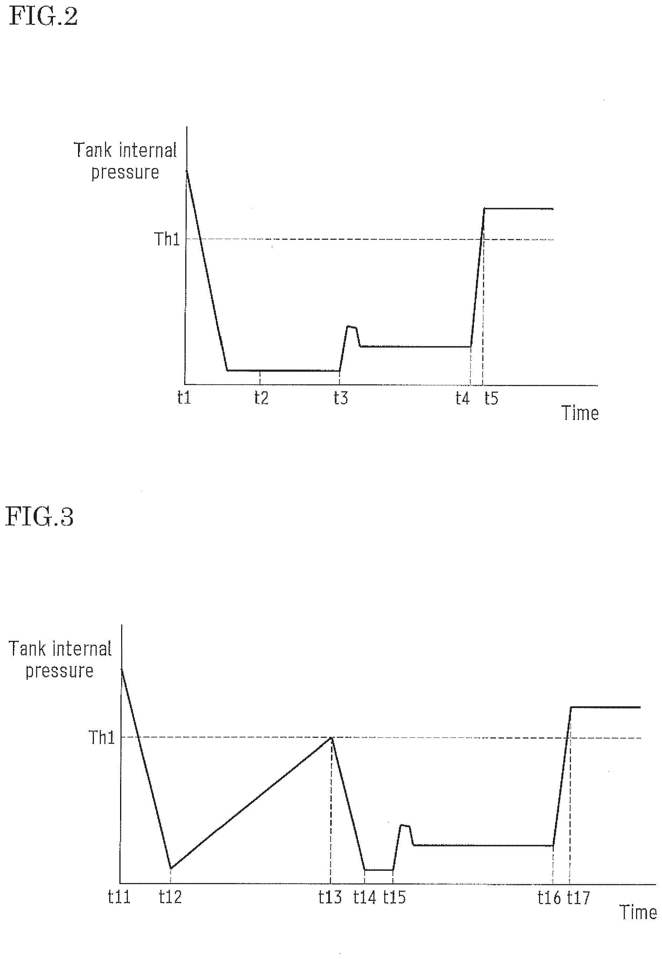

   FIG. 2 is a graph for explaining one example of operations of the evaporated fuel treatment device during vehicle fueling, the graph showing schematically a relationship between an elapsed time and a tank internal pressure during fueling.
[FIG. 3]
   FIG. 3 is a graph for explaining another example of operations of the evaporated fuel treatment device during vehicle fueling, the graph showing schematically the relationship between the elapsed time and the tank internal pressure during fueling.
[FIG. 4]

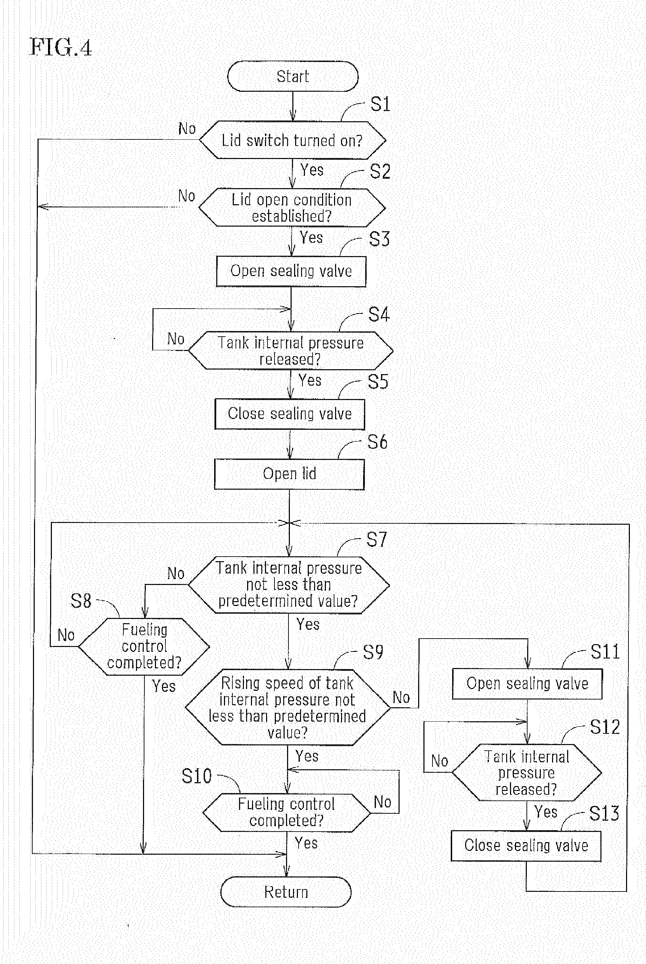

   FIG. 4 is a flowchart for explaining fueling control by the evaporated fuel treatment device during vehicle fueling.

### Description of Embodiments

Hereinafter, one embodiment of the present invention will be described with reference to the drawings. In this embodiment, description will be given on a case in which the present invention is applied to an evaporated fuel treatment device for treating evaporated fuel generated in a fuel tank of an internal combustion engine mounted on a vehicle.

### -Schematic Configuration of Evaporated Fuel Treatment Device-

First, the schematic configuration of an evaporated fuel treatment device 100 according to this embodiment will be described with reference to FIG. 1.

As shown in FIG. 1, the evaporated fuel treatment device 100 includes: a fuel tank 1; a canister 2; a vapor passage 3; a purge passage 4; an air passage 5; a sealing valve unit 6; a purge control valve 7; and an ECU 8. The evaporated fuel treatment device 100 is connected to an intake system 50 of an internal combustion engine.

Here, in the intake system 50 of the internal combustion engine, an air cleaner 51, an intake pipe 52, a surge tank 53, an intake manifold 54 and the like are disposed in this order from an upstream side in a flow direction of an intake air. In the intake pipe 52, a throttle valve 55 is disposed. On the intake manifold 54, an injector (fuel injection valve) 56 is mounted.

The fuel tank 1 is configured to store fuel F for the internal combustion engine. A fuel pump 11 is disposed inside the fuel tank 1. The fuel pump 11 is connected to the injector 56 via a fuel supply passage 12. With such a configuration, when the fuel pump 11 is driven, the fuel F in the fuel tank 1 is supplied to the injector 56 through the fuel supply passage 12.

The fuel tank 1 includes: a level sensor 13 for detecting a level of the fuel F stored inside; and a tank internal pressure sensor 14 for detecting a pressure (tank internal pressure) in an upper space S disposed above the fuel level.

Also, an inlet pipe 15 for feeding fuel is connected to the fuel tank 1. At an upper end of the inlet pipe 15, a fuel feed opening 15a is formed, to which a cap 15b is removably attached. In the vicinity of a lower end of the inlet pipe 15, a check valve 15c is provided. The check valve 15c is configured to: allow the fuel to move from the inlet pipe 15 to the fuel tank 1; and prevent the fuel from moving from the fuel tank 1 to the inlet pipe 15.

A part of the inlet pipe 15 in the vicinity of the fuel feed opening 15a is connected to (communicated with) the upper space S of the fuel tank 1 by a breather pipe 16. The breather pipe 16 is to discharge the air in the upper space S of the fuel tank 1 to the fuel feed opening 15a when the fuel is fed to the fuel tank 1 through the inlet pipe 15.

Outside the cap 15b that is attached to the fuel feed opening 15a, a lid 9 is provided so as to cover the cap 15b and the fuel feed opening 15a. The lid 9 is configured to open/close by a lid opening/closing mechanism 91. In the vicinity of the lid 9, a lid opening/closing sensor 92 is provided so as to detect the open/closed state of the lid 9.

The lid opening/closing mechanism 91 includes a biasing member for biasing the lid 9 in the opening direction and a holding member for holding the lid 9 in a closed state. To the lid opening/closing mechanism 91, the ECU 8 is connected as well as a manual opening/closing device 93 for allowing a user to open manually the lid 9. The lid opening/closing mechanism 91 is configured to open the lid 9 by releasing the holding state of the lid 9 with the holding member when the instruction to open the lid 9 is input from the ECU 8, or when an operation to open the lid 9 is performed by the manual opening/closing device 93. Note that the manual opening/closing device 93 is provided so that the user opens the lid 9 upon, for example, failure of a lid switch 81 (described later).

The canister 2 contains, in its inside, an adsorbent such as activated carbon so as to collect (adsorb and hold) the evaporated fuel generated in the fuel tank 1. The vapor passage 3, the purge passage 4 and the air passage 5 are connected to the canister 2.

The vapor passage 3, which connects the fuel tank 1 to the canister 2, is provided so as to introduce the evaporated fuel generated in the fuel tank 1 to the canister 2. The vapor passage 3 is an example of the "evaporated fuel passage" of the present invention. A fill-up regulating valve 31 and a cutoff valve 32 are disposed at a lower end (end portion inside the fuel tank 1) of the vapor passage 3.

The fill-up regulating valve 31 is configured to open when the fuel level in the fuel tank 1 is lower than the upper limit (fill-up level) and to close when the fuel level rises up to the upper limit. The cutoff valve 32 is disposed at a position higher than the fill-up regulating valve 31. The cutoff valve 32 is configured to open normally and to close when, for example, a vehicle turns over on its side. The fill-up regulating valve 31 and the cutoff valve 32 can prevent liquid fuel from infiltrating into the vapor passage 3.

Also, in the vapor passage 3, the sealing valve unit 6 is disposed. The sealing valve unit 6 includes a sealing valve 61 and a bidirectional check valve 62 arranged in parallel to the sealing valve 61.

The sealing valve 61 is a solenoid valve that is opened/closed by the ECU 8. The sealing valve 61 is being closed in a non-energized state, and is opened when energized. When the sealing valve 61 is opened, the fuel tank 1 is communicated with the canister 2, and when the sealing valve 61 is closed, the communication between the fuel tank 1 and the canister 2 is cut off. The sealing valve 61 is an example of the "valve member" of the present invention.

The bidirectional check valve 62 includes a forward relief valve and a backward relief valve. The forward relief valve is configured to open when the internal pressure in the fuel tank 1 is considerably increased compared to the internal pressure in the canister 2. On the other hand, the backward relief valve is configured to open when the internal pressure in the fuel tank 1 is considerably reduced compared to the internal pressure in the canister 2. For example, the opening pressure of the forward relief valve is set to 20 kPa, while the opening pressure of the backward relief valve is set to 15 kPa.

The purge passage 4 connects the canister 2 to the intake system 50 of the internal combustion engine so as to introduce the evaporated fuel collected in the canister 2 to the intake system 50 of the internal combustion engine. The purge passage 4 includes a purge control valve 7 that is a vacuum switching valve (VSV) whose opening degree is adjustable. The purge control valve 7 is a normally closed valve that is controlled by the ECU 8, and is configured to open when a predetermined purge condition is established.

An end of the air passage 5 is connected to the canister 2, while the other end is opened to the atmosphere in the vicinity of the fuel feed opening 15a. That is, the air passage 5 is provided to communicate the canister 2 with the atmosphere. The air passage 5 includes an air filter 5a.

The ECU 8 is provided to control the evaporated fuel treatment device 100. The ECU 8 includes a CPU, a ROM, a RAM, a backup RAM, an input interface and an output interface. The ECU 8 is an example of the "control unit" of the present invention.

The CPU executes calculation processing based on various control programs and maps stored in the ROM. The ROM stores the various control programs and the maps to be referred to when executing the various control programs. The RAM is a memory for temporarily storing calculation results by the CPU and detected results by various sensors. The backup RAM is a nonvolatile memory for storing data to be stored when the power is turned off.

To the input interface are connected: the level sensor 13; the tank internal pressure sensor 14; the lid opening/closing sensor 92; the lid switch 81; a vehicle speed sensor 82 and the like. The lid switch 81, which is disposed, for example, in a vehicle cabin, is a switch operated by a user when he/she intends to open the lid 9 for the fueling operation. The lid switch 81 is, for example, a momentary switch that is configured to output a signal to the ECU 8 when operated by the user. The lid switch 81 is an example of the "operation unit" of the present invention. The vehicle speed sensor 82 is provided to detect the vehicle speed.

To the output interface are connected: the sealing valve 61; the purge control valve 7; the lid opening/closing mechanism 91 and the like. The ECU 8 is configured to control the sealing valve 61, the purge control valve 7 and the lid opening/closing mechanism 91 based on detected results by the various sensors. The ECU 8 also has a timer function.

Specifically, when the lid switch 81 is operated, the ECU 8 opens the sealing valve 61 so as to release the tank internal pressure and then closes the sealing valve 61 after release of the tank internal pressure, under the condition that the lid open condition is established and the fueling control is started. After that, the ECU 8 opens the lid 9, thus the user can feed the fuel to the fuel tank 1. In the evaporated fuel treatment device 100, the upper space S of the fuel tank 1 is sealed when the fuel level in the fuel tank 1 reaches the breather pipe 16 during feeding the fuel to the fuel tank 1 through the inlet pipe 15 while the sealing valve 61 is being closed.

Also, after the sealing valve 61 is closed during the fueling control, the ECU 8 opens the sealing valve 61 so as to release the tank internal pressure and then closes the sealing valve 61 after release of the tank internal pressure, under the condition that the tank internal pressure is equal to or more than a predetermined value Th1 and furthermore the rising speed of the tank internal pressure is less than a predetermined value Th2. After the sealing valve 61 is closed during the fueling control, the ECU 8 also maintains the closed state of the sealing valve 61, under the condition that the tank internal pressure is equal to or more than the predetermined value Th1 and furthermore the rising speed of the tank internal pressure is equal to or more than the predetermined value Th2. The predetermined values Th1 and Th2 are respectively an example of the "first predetermined value" and the "second predetermined value" of the present invention.

-Operations of Evaporated Fuel Treatment Device-Next, operations of the evaporated fuel treatment device 100 of this embodiment will be described. Hereinafter, the operations during vehicle stopping and during vehicle traveling will be described, and then the operations during vehicle fueling will be described.

### (During Vehicle Stopping)

The evaporated fuel treatment device 100 closes the sealing valve 61 during vehicle stopping. Thus, the fuel tank 1 is sealed unless the bidirectional check valve 62 is opened. Also, the purge control valve 7 is closed.

### (During Vehicle Traveling)

The evaporated fuel treatment device 100 introduces the evaporated fuel adsorbed in the canister 2 to the intake system 50 of the internal combustion engine when the predetermined purge condition is established during vehicle traveling. Specifically, the purge control valve 7 is opened so that the negative pressure in the intake system 50 of the internal combustion engine acts on the canister 2. Thus, the air is introduced from the air passage 5 to the canister 2. For this reason, the evaporated fuel in the canister 2 is introduced, together with the air, to the intake system 50 of the internal combustion engine through the purge passage 4. Thus, the evaporated fuel is combusted in the internal combustion engine, which prevents the evaporated fuel from being released to the atmosphere.

During vehicle traveling, the sealing valve 61 may be appropriately opened so as to maintain the tank internal pressure in the fuel tank 1 close to the atmospheric pressure. It is preferable that the sealing valve 61 is opened when the purge control valve 7 is opened, i.e., when the negative pressure acts on the canister 2. In this way, the evaporated fuel in the fuel tank 1 is likely to be directly introduced to the intake system 50 of the internal combustion engine without being collected in the canister 2. Thus, it is possible to prevent increase of the evaporated fuel adsorbed in the canister 2 during vehicle traveling.

### (During Vehicle Fueling)

### [One Example of Operations During Fueling]

First, description will be given on one example of operations of the evaporated fuel treatment device 100 during vehicle fueling with reference to FIG. 2. In this example of the operations, description will be given on a case in which the tank internal pressure is not increased for the time period from when the lid switch 81 is operated to when the cap 15b is removed.

At the time point t1 in FIG. 2, the user operates the lid switch 81, then when the ECU 8 determines that the lid open condition is established, the fueling control is started and the ECU 8 opens the sealing valve 61. Thus, the evaporated fuel in the fuel tank 1 is introduced to and collected in the canister 2. Gas components other than the evaporated fuel are discharged from the air passage 5 to the atmosphere. At this time, the tank internal pressure in the fuel tank 1 is released, which results in the tank internal pressure being close to the atmosphere.

Then, at the time point t2, the ECU 8 determines that the tank internal pressure has been released, and closes the sealing valve 61. The ECU 8 also outputs an instruction to open the lid 9 so that the instruction is input to the lid opening/closing mechanism 91. The lid opening/closing mechanism 91 opens the lid 9 by releasing the holding state of the lid 9 with the holding member. Thus, the user can feed the fuel to the fuel tank 1.

After that, the user removes the cap 15b from the fuel feed opening 15a of the inlet pipe 15 so that a fueling gun (not shown) is inserted into the fuel feed opening 15a. Then, at the time point t3, the feeding of the fuel is started, and the fuel discharged from the fueling gun is introduced to the fuel tank 1 through the inlet pipe 15. At the time of fueling, the check valve 15c is opened. At this time, the air in the upper space S of the fuel tank 1 is discharged to the fuel feed opening 15a through the breather pipe 16. Also, when the flow rate of the fuel from the fueling gun is constant, the tank internal pressure is a steady state (for example, approximately 1 kPa). Thus, the fuel level in the fuel tank 1 rises due to the continuous fueling.

After that, at the time point t4, when the fuel level in the fuel tank 1 reaches the breather pipe 16 and the inlet pipe 15, the upper space S of the fuel tank 1 is sealed due to the sealing valve 61 being closed. Then, the fuel discharged from the fueling gun is accumulated in the inlet pipe 15 and the fuel level in the inlet pipe 15 rises. At this time, the tank internal pressure is suddenly increased. Then, at the time point t5, the inlet pipe 15 is filled with the fuel up to the vicinity of the fuel feed opening 15a, thus the automatic stop function of the fueling gun is executed so as to stop fueling from the fueling gun. When the fueling is stopped, the check valve 15c is closed so as to suppress a back flow of the fuel in the fuel tank 1 to the inlet pipe 15.

Here, when the tank internal pressure is suddenly increased, the tank internal pressure reaches the predetermined value Th1 or more. However, the rising speed of the tank internal pressure is equal to or more than the predetermined value Th2, thus the closed state of the sealing valve 61 is maintained by the ECU 8. Accordingly, after the fueling is stopped, the upper space S of the fuel tank 1 is being sealed so that the internal pressure in the fuel tank 1, which has been increased by the fueling, is maintained. Therefore, the fuel level in the vicinity of the fuel feed opening 15a is not likely to lower, which results in difficulty in the additional fueling.

Then, after the fueling control is completed, the tank internal pressure is released, for example, by opening the sealing valve 61 during traveling. That is, the tank internal pressure that has been increased by the fueling is maintained until at least the fueling control is completed.

### [Another Example of Operations During Fueling]

Next, description will be given on another example of operations of the evaporated fuel treatment device 100 during vehicle fueling with reference to FIG. 3. In this example of the operations, description will be given on a case in which the tank internal pressure is increased for the time period from when the lid switch 81 is operated to when the cap 15b is removed. That is, description will be given on a case in which, after the lid switch 81 is operated, the vehicle is left for a while without the fueling operation being sequentially performed so that the tank internal pressure is increased.

At the time point t11 in FIG. 3, the user operates the lid switch 81, then when the ECU 8 determines that the lid open condition is established, the fueling control is started and the ECU 8 opens the sealing valve 61. Thus, the evaporated fuel in the fuel tank 1 is introduced to and collected in the canister 2. Gas components other than the evaporated fuel are discharged from the air passage 5 to the atmosphere. At this time, the tank internal pressure in the fuel tank 1 is released, which results in the tank internal pressure being close to the atmosphere.

Then, at the time point t12, the ECU 8 determines that the tank internal pressure has been released, and closes the sealing valve 61. The ECU 8 also outputs an instruction to open the lid 9 so that the instruction is input to the lid opening/closing mechanism 91. The lid opening/closing mechanism 91 opens the lid 9 by releasing the holding state of the lid 9 with the holding member. Thus, the user can feed the fuel to the fuel tank 1.

Here, if the vehicle is left with the cap 15b not being removed from the fuel feed opening 15a of the inlet pipe 15, the tank internal pressure is slowly increased due to the fuel tank 1 being sealed.

After that, at the time point t13, the ECU 8 determines that the tank internal pressure is equal to or more than the predetermined value Th1 and furthermore that the rising speed of the tank internal pressure is less than the predetermined value Th2, and opens the sealing valve 61. Thus, the evaporated fuel in the fuel tank 1 is introduced to and collected in the canister 2. Gas components other than the evaporated fuel are discharged from the air passage 5 to the atmosphere. That is, when the vehicle is left during the fueling control and the tank internal pressure is increased, the tank internal pressure is released to the canister 2.

Then, at the time point t14, the ECU 8 determines that the tank internal pressure has been released, and closes the sealing valve 61. After that, the user removes the cap 15b from the fuel feed opening 15a of the inlet pipe 15 so that the fueling gun (not shown) is inserted into the fuel feed opening 15a.

Then, at the time point t15, the feeding of the fuel is started, and the fuel discharged from the fueling gun is introduced to the fuel tank 1 through the inlet pipe 15. At the time of fueling, the check valve 15c is opened. At this time, the air in the upper space S of the fuel tank 1 is discharged to the fuel feed opening 15a through the breather pipe 16. Also, when the flow rate of the fuel from the fueling gun is constant, the tank internal pressure is a steady state (for example, approximately 1 kPa). Thus, the fuel level in the fuel tank 1 rises due to the continuous fueling.

After that, at the time point t16, when the fuel level in the fuel tank 1 reaches the breather pipe 16 and the inlet pipe 15, the upper space S of the fuel tank 1 is sealed due to the sealing valve 61 being closed. Then, the fuel discharged from the fueling gun is accumulated in the inlet pipe 15 and the fuel level in the inlet pipe 15 rises. At this time, the tank internal pressure is suddenly increased. Then, at the time point t17, the inlet pipe 15 is filled with the fuel up to the vicinity of the fuel feed opening 15a, thus the automatic stop function of the fueling gun is executed so as to stop fueling from the fueling gun. When the fueling is stopped, the check valve 15c is closed so as to suppress a back flow of the fuel in the fuel tank 1 to the inlet pipe 15.

Here, when the tank internal pressure is suddenly increased, the tank internal pressure reaches the predetermined value Th1 or more. However, the rising speed of the tank internal pressure is equal to or more than the predetermined value Th2, thus the closed state of the sealing valve 61 is maintained by the ECU 8. Accordingly, after the fueling is stopped, the upper space S of the fuel tank 1 is being sealed so that the internal pressure in the fuel tank 1, which has been increased by the fueling, is maintained. Therefore, the fuel level in the vicinity of the fuel feed opening 15a is not likely to lower, which results in difficulty in the additional fueling.

Then, after the fueling control is completed, the tank internal pressure is released, for example, by opening the sealing valve 61 during traveling. That is, the tank internal pressure that has been increased by the fueling is maintained until at least the fueling control is completed.

### [Fueling Control by ECU]

Next, description will be given on the fueling control by the ECU 8 of the evaporated fuel treatment device 100 during vehicle fueling with reference to FIG. 4. Note that the following steps are repeatedly performed not only when the internal combustion engine is operated but also when the internal combustion engine is stopped.

First, in step S1 of FIG. 4, the ECU 8 determines whether the lid switch 81 has been operated or not. Specifically, when the lid switch 81 inputs a signal to the ECU 8, the ECU 8 determines that the lid switch 81 has been operated by the user, then the procedure advances to step S2. On the other hand, when the lid switch 81 does not input any signal to the ECU 8, the lid switch 81 has not yet been operated by the user. Thus, the procedure moves to "Return".

Next, in step S2, the ECU 8 determines whether the lid open condition is established or not. The lid open condition is to determine whether it is possible to allow the user to perform the fueling operation. For example, when the vehicle is stopped, it is determined that the lid open condition is established. Whether the vehicle is stopped or not is determined based on detection results by the vehicle speed sensor 82. Then, when the ECU 8 determines that the lid open condition is established, the fueling control is started, and the procedure advances to step S3. On the other hand, when the ECU 8 determines that the lid open condition is not established, the fueling control is not started and the procedure moves to "Return".

Next, in step S3, the ECU 8 opens the sealing valve 61. Thus, the evaporated fuel in the fuel tank 1 is introduced to and collected in the canister 2. Gas components other than the evaporated fuel are discharged from the air passage 5 to the atmosphere.

Then, in step S4, the ECU 8 determines whether the tank internal pressure has been released or not. For example, when the tank internal pressure is equal to or less than the predetermined value and when the opening time of the sealing valve 61 is equal to or more than the predetermined value, the ECU 8 determines that the tank internal pressure has been released. On the other hand, when the tank internal pressure exceeds the predetermined value and when the opening time of the sealing valve 61 is less than the predetermined value, the ECU 8 determines that the tank internal pressure is not released. The predetermined value of the tank internal pressure is a preset value close to the atmospheric pressure (for example, 2 kPa). The predetermined value of the valve opening time is a preset time period (for example, 10 seconds) that is necessary for the tank internal pressure to be reduced close to the atmospheric pressure when the sealing valve 61 is opened. This time period is an example of the "third predetermined value" of the present invention. Also, the tank internal pressure is determined based on detection results by the tank internal pressure sensor 14. The valve opening time is counted by a timer of the ECU 8. Then, when the ECU 8 determines that the tank internal pressure has been released, the procedure advances to step S5. On the other hand, when the ECU 8 determines that the tank internal pressure is not released, step S4 is performed repeatedly. That is, the ECU 8 waits until the tank internal pressure is released.

In step S5, the ECU 8 closes the sealing valve 61. Then, in step S6, the ECU 8 opens the lid 9. Specifically, the ECU 8 outputs the instruction to open the lid 9, which is input to the lid opening/closing mechanism 91. Thus, the lid opening/closing mechanism 91 opens the lid 9 by releasing the holding state of the lid 9 with the holding member. Thus, the user can feed the fuel to the fuel tank 1.

In step S7, the ECU 8 determines whether the tank internal pressure is not less than the predetermined value Th1 or not. The predetermined value Th1 is a preset value (for example, 5 kPa) higher than the tank internal pressure in the steady state during fueling. When the ECU 8 determines that the tank internal pressure is not less than the predetermined value Th1, the procedure advances to step S9. On the other hand, when the ECU 8 determines that the tank internal pressure is neither more than nor equal to the predetermined value Th1, (i.e., when the tank internal pressure is less than the predetermined value Th1), the procedure advances to step S8.

In step S8, the ECU 8 determines whether the fueling control is to be completed or not. The fueling control completion condition is such as the lid 9 being closed, the vehicle speed not less than a predetermined value, or the elapsed time not less than a predetermined value after the lid switch 81 is operated. When any one of the above conditions is established, it is determined that the fueling control is to be completed. Whether the lid 9 is closed or not is determined based on detection results of the lid opening/closing sensor 92. The predetermined value of the vehicle speed is a preset value (for example, 5 km/h) based on which it is determined that the vehicle has been started to travel. Also, the predetermined value of the elapsed time is a preset value (for example, approximately several tens of minutes). Then, when the ECU 8 determines that the fueling control is to be completed, the fueling control is completed and the procedure moves to "Return". On the other hand, when the ECU 8 determines that the fueling control is not to be completed, the procedure returns to step S7.

When the tank internal pressure is not less than the predetermined value Th1 (step S7: Yes), the procedure advances to step S9 in which the ECU 8 determines whether the rising speed of the tank internal pressure is not less than the predetermined value Th2 or not. The predetermined value Th2 is a preset value (for example, 1 kPa/sec) to determine the reason why the tank internal pressure rises. The rising speed of the tank internal pressure is calculated based on the detection results by the tank internal pressure sensor 14. When the ECU 8 determines that the rising speed of the tank internal pressure is not less than the predetermined value Th2, the tank internal pressure is being suddenly increased due to the fueling (for example, see the time point t5 in FIG. 2 and the time point t17 in FIG. 3). Thus, the ECU 8 maintains the closed state of the sealing valve 61 and the procedure advances to step S10. On the other hand, when the ECU 8 determines that the rising speed of the tank internal pressure is neither more than nor equal to the predetermined value Th2 (i.e., when the rising speed of the tank internal pressure is less than the predetermined value Th2), the tank internal pressure is being slowly increased due to the vehicle being left (for example, see the time point t13 in FIG. 3). Thus, the procedure advances to step S11.

In the step S10, the ECU 8 determines whether the fueling control is to be completed or not. The method for determining whether the fueling control is to be completed or not is the same as the method in step S8. When the ECU 8 determines that the fueling control is to be completed, the fueling control is completed and the procedure moves to "Return". On the other hand, when the ECU 8 determines that the fueling control is not to be completed, step S10 is performed repeatedly. That is, the ECU 8 waits while maintaining the closed state of the sealing valve 61 until the fueling control is completed. Thus, the internal pressure in the fuel tank 1, which has been increased due to the fueling, is maintained.

When the tank internal pressure is not less than the predetermined value Th1 and when the rising speed of the tank internal pressure is less than the predetermined value Th2 (step S9: No), the procedure advances to step S11 in which the ECU 8 opens the sealing valve 61. Thus, the evaporated fuel in the fuel tank 1 is introduced to and collected in the canister 2. Gas components other than the evaporated fuel are discharged from the air passage 5 to the atmosphere. That is, when the vehicle is left during the fueling control and the tank internal pressure is increased, the tank internal pressure is released to the canister 2.

Then in step S12, the ECU 8 determines whether the tank internal pressure has been released or not. The method for determining whether the tank internal pressure has been released or not is the same as the method in step S4. When the ECU 8 determines that the tank internal pressure has been released, the procedure advances to step S13. On the other hand, when the ECU 8 determines that the tank internal pressure is not released, the step S12 is performed repeatedly. That is, the ECU 8 waits until the tank internal pressure is released.

In step S13, the ECU 8 closes the sealing valve 61. After that, the procedure returns to step S7.

### -Effects-

In this embodiment, as described above, when the lid switch 81 is operated and the fueling control is started, the tank internal pressure in the fuel tank 1 is released by opening the sealing valve 61. After the tank internal pressure is released, the sealing valve 61 is closed. With such a configuration, when the fuel level in the fuel tank 1 reaches the breather pipe 16 during fueling, the upper space S of fuel tank 1 can be sealed. Thus, after the fueling is stopped, the tank internal pressure, which has been increased by the fueling, can be maintained. Therefore, the fuel level in the vicinity of the fuel feed opening 15a is not likely to lower, which results in difficulty in the additional fueling. Accordingly, the excessive fueling can be prevented.

After the sealing valve 61 is closed during the fueling control, the sealing valve 61 is opened so as to release the tank internal pressure and then closed after release of the tank internal pressure, under the condition that the tank internal pressure is equal to or more than the predetermined value Th1 and furthermore the rising speed of the tank internal pressure is less than the predetermined value Th2. With such a configuration, when the tank internal pressure is slowly increased due to the vehicle being left after the lid switch 81 is operated, the tank internal pressure can be released via the canister 2. Thus, the tank internal pressure can be maintained less than the predetermined value Th1 when the vehicle is left with the cap 15b not being removed during the fueling control. Thus, it is possible to prevent the tank internal pressure from being increased when the user removes the cap 15b from the fuel feed opening 15a of the inlet pipe 15. Therefore, when the cap 15b is removed from the fuel feed opening 15a, it is possible to prevent the evaporated fuel from being discharged from the fuel feed opening 15a, which results in reduction in generation of bad smell (fuel smell).

Also, after the sealing valve 61 is closed during the fueling control, the closed state of the sealing valve 61 is maintained under the condition that the tank internal pressure is equal to or more than the predetermined value Th1 and furthermore the rising speed of the tank internal pressure is equal to or more than the predetermined value Th2. With such a configuration, when the tank internal pressure is suddenly increased due to the fueling, it is possible to maintain the sealing state of the upper space S of the fuel tank 1. As a result, it is possible to prevent the excessive fueling while preventing the tank internal pressure from being increased when the user removes the cap 15b from the fuel feed opening 15a of the inlet pipe 15.

Also, in this embodiment, it is determined that the tank internal pressure has been released when the tank internal pressure is not more than the predetermined value and when the opening time of the sealing valve 61 is not less than the predetermined value. Thus, it is possible to easily determine whether the tank internal pressure has been released or not.

### -Other Embodiments-

Note that the embodiment disclosed above is to be considered in all respects as illustrative and not limiting. The scope of the present invention is indicated by the appended claims rather than by the foregoing description, and all modifications and changes that come within the meaning and range of equivalency of the claims are intended to be embraced therein.

For example, in this embodiment, it is determined that the tank internal pressure has been released when the tank internal pressure is not more than the predetermined value and when the opening time of the sealing valve 61 is not less than the predetermined value. However, the present invention is not limited thereto. It may be determined that the tank internal pressure has been released only when the tank internal pressure is not more than the predetermined value regardless of the opening time of the sealing valve. It may also be determined that the tank internal pressure has been released only when the opening time of the sealing valve is not less than the predetermined value regardless of the tank internal pressure.

Also, in this embodiment, after the fueling control is completed, the tank internal pressure is released by opening the sealing valve 61 during the travel. However, the present invention is not limited thereto. When the tank internal pressure is increased due to the fueling (step S9: Yes) and the fueling control is completed (step 10: Yes), the sealing valve may be temporarily opened so as to release the tank internal pressure to the canister.

Also, in steps S4 and S12 of this embodiment, the method for determining whether the tank internal pressure has been released or not is the same. However, the present invention is not limited thereto. The method for determining whether the tank internal pressure has been released or not may be different from each other.

Also, in this embodiment, stopping of the vehicle is indicated as the lid open condition. However, the present invention is not limited thereto. The lid open condition may be that the vehicle is stopped and furthermore the rotational speed of the internal combustion engine per unit time is low.

Also, in this embodiment, when the lid switch 81 is operated (step S1: Yes) and the tank internal pressure is released (step S4: Yes), the sealing valve 61 is closed (step S5) and then the lid 9 is opened (step S6). However, the present invention is not limited thereto. When the lid switch 81 is operated (step S1: Yes) and the tank internal pressure is released (step S4: Yes), the lid 9 may be opened before the sealing valve 61 is closed, or the closing of the sealing valve 61 and the opening of the lid 9 may be performed simultaneously. That is, step S5 and step S6 in the flowchart may be performed in reverse order, or may be performed simultaneously. It is preferable that the lid 9 is opened after release of the tank internal pressure so that the cap 15b can be removed after release of the tank internal pressure.

### Industrial Applicability

The present invention may be applied to an evaporated fuel treatment device that treats evaporated fuel generated in a fuel tank of an internal combustion engine that is mounted on a vehicle.

### Reference Signs List

- 1: Fuel tank
- 2: Canister
- 3: Vapor passage (evaporated fuel passage)
- 8: ECU (control unit)
- 14: Tank internal pressure sensor
- 15: Inlet pipe
- 16: Breather pipe
- 61: Sealing valve (valve member)
- 81: Lid switch (operation unit)
- 100: Evaporated fuel treatment device

## Claims

1. An evaporated fuel treatment device, comprising:
a fuel tank (1) configured to store fuel for an internal combustion engine;
a canister (2) configured to collect evaporated fuel generated in the fuel tank;
an evaporated fuel passage (3) configured to connect the fuel tank to the canister;
a valve member (61) disposed in the evaporated fuel passage and configured to open/close the evaporated fuel passage;
an inlet pipe (15) disposed in the fuel tank and configured to feed the fuel;
a breather pipe (16) configured to communicate the fuel tank with the inlet pipe;
a tank internal pressure sensor (14) configured to detect an internal pressure of the fuel tank;
a control unit (8) configured to control opening/closing of the valve member; and
an operation unit (81) to be operated when a fueling operation is performed,
wherein, when the operation unit is operated and fueling control is started, the control unit is configured to open the valve member so as to release the internal pressure of the fuel tank, and the control unit is configured to close the valve member after release of the internal pressure in the fuel tank, and
wherein an upper space (S) disposed above a fuel level in the fuel tank is sealed when the fuel level in the fuel tank reaches the breather pipe during feeding the fuel to the fuel tank through the inlet pipe while the valve member is being closed,
**characterized in that**,
after the valve member is closed during the fueling control, the control unit is configured to open the valve member so as to release the internal pressure in the fuel tank and then the control unit is configured to close the valve member after release of the internal pressure in the fuel tank, under a condition that the internal pressure in the fuel tank is equal to or more than a first predetermined value (Th1) and furthermore a rising speed of the internal pressure in the fuel tank is less than a second predetermined value (Th2), and
wherein, after the valve member is closed during the fueling control, the control unit is configured to maintain a closed state of the valve member, under a condition that the internal pressure in the fuel tank is equal to or more than the first predetermined value and furthermore the rising speed of the internal pressure in the fuel tank is equal to or more than the second predetermined value.

2. The evaporated fuel treatment device according to claim 1,
wherein the control unit is configured to determine that the internal pressure in the fuel tank has been released when the internal pressure in the fuel tank is reduced close to an atmospheric pressure by opening the valve member.

3. The evaporated fuel treatment device according to claim 1 or 2,
wherein the control unit is configured to determine that the internal pressure in the fuel tank has been released when an opening time of the valve member is equal to or more than a third predetermined value.

## Patentansprüche

1. Kraftstoffdampfbehandlungsvorrichtung, umfassend:
einen Kraftstofftank (1), der ausgestaltet ist, Kraftstoff für einen Verbrennungsmotor zu speichern;
einen Behälter (2), der ausgestaltet ist, sich in dem Kraftstofftank bildenden Kraftstoffdampf zu sammeln;
einen Kraftstoffdampfdurchgang (3), der ausgestaltet ist, den Kraftstofftank mit dem Behälter zu verbinden;
ein Ventilelement (61), das in dem Kraftstoffdampfdurchgang angeordnet und ausgestaltet ist, den Kraftstoffdampfdurchgang zu öffnen/schließen;
ein Einlassrohr (15), das in dem Kraftstofftank angeordnet und ausgestaltet ist, den Kraftstoff zuzuführen;
ein Entlüftungsrohr (16), das ausgestaltet ist, den Kraftstofftank mit dem Einlassrohr zu verbinden;
einen Tankinnendrucksensor (14), der ausgestaltet ist, einen Innendruck des Kraftstofftanks zu detektieren;
eine Steuereinheit (8), die ausgestaltet ist, ein Öffnen/Schließen des Ventilelements zu steuern; und
eine Betätigungseinheit (81), die betätigt wird, wenn ein Betankungsvorgang durchgeführt wird,
wobei, wenn die Betätigungseinheit betätigt wird und eine Betankungssteuerung gestartet wird, die Steuereinheit ausgestaltet ist, das Ventilelement zu öffnen, um den Innendruck des Kraftstofftanks abzulassen, und die Steuereinheit ausgestaltet ist, das Ventilelement nach Ablassen des Innendrucks des Kraftstofftanks zu schließen, und
wobei ein über einem Kraftstoffpegel in dem Kraftstofftank angeordneter oberer Raum (S) abgedichtet wird, wenn der Kraftstoffpegel in dem Kraftstofftank während eines Zuführens des Kraftstoffs zu dem Kraftstofftank durch das Einlassrohr bei geschlossenem Ventilelement das Entlüftungsrohr erreicht,
**dadurch gekennzeichnet, dass**
nachdem das Ventilelement während der Betankungssteuerung geschlossen wurde, die Steuereinheit ausgestaltet ist, das Ventilelement zu öffnen, um den Innendruck in dem Kraftstofftank abzulassen, und anschließend die Steuereinheit ausgestaltet ist, das Ventilelement nach Ablassen des Innendrucks in dem Kraftstofftank unter einer Bedingung zu schließen, dass der Innendruck in dem Kraftstofftank gleich oder höher ist als ein erster vorbestimmter Wert (Th1) und ferner eine Anstieggeschwindigkeit des Innendrucks in dem Kraftstofftank kleiner als ein zweiter vorbestimmter Wert (Th2) ist, und
wobei, nachdem das Ventilelement während der Betankungssteuerung geschlossen wurde, die Steuereinheit ausgestaltet ist, einen geschlossenen Zustand des Ventilelements unter einer Bedingung aufrechtzuerhalten, dass der Innendruck in dem Kraftstofftank gleich oder höher als der erste vorbestimmte Wert ist und ferner die Anstieggeschwindigkeit des Innendrucks in dem Kraftstofftank gleich oder höhere als der zweite vorbestimmte Wert ist.

2. Kraftstoffdampfbehandlungsvorrichtung nach Anspruch 1,
wobei die Steuereinheit ausgestaltet ist, zu bestimmen, dass der Innendruck in dem Kraftstofftank abgelassen wurde, wenn der Innendruck in dem Kraftstofftank annähernd auf einen atmosphärischen Druck durch Öffnen des Ventilelements reduziert ist.

3. Kraftstoffdampfbehandlungsvorrichtung nach Anspruch 1 oder 2,
wobei die Steuereinheit ausgestaltet ist, zu bestimmen, dass der Innendruck in dem Kraftstofftank abgelassen wurde, wenn eine Öffnungszeit des Ventilelements gleich oder höher als ein dritter vorbestimmter Wert ist.

## Revendications

1. Dispositif de traitement de carburant évaporé, comportant :
un réservoir (1) de carburant configuré pour stocker du carburant destiné à un moteur à combustion interne ;
un bidon (2) configuré pour recueillir du carburant évaporé généré dans le réservoir de carburant ;
un passage (3) de carburant évaporé configuré pour relier le réservoir de carburant au bidon ;
un organe (61) de vanne disposé dans le passage de carburant évaporé et configuré pour ouvrir/fermer le passage de carburant évaporé ;
un tuyau (15) d'entrée disposé dans le réservoir de carburant et configuré pour amener le carburant ;
un reniflard (16) configuré pour faire communiquer le réservoir de carburant avec le tuyau d'entrée ;
un capteur (14) de pression interne de réservoir configuré pour détecter une pression interne du réservoir de carburant ;
une unité (8) de commande configurée pour commander l'ouverture/la fermeture de l'organe de vanne ; et
une unité (81) de manœuvre à manœuvrer lorsqu'une opération de ravitaillement en carburant est effectuée,
l'unité de commande étant configurée, lorsque l'unité de manœuvre est manœuvrée et que la commande de ravitaillement en carburant est démarrée, pour ouvrir l'organe de vanne de façon à libérer la pression interne du réservoir de carburant, et l'unité de commande étant configurée pour fermer l'organe de vanne après la libération de la pression interne dans le réservoir de carburant, et
un espace supérieur (S) disposé au-dessus d'un niveau de carburant dans le réservoir de carburant étant scellé lorsque le niveau de carburant dans le réservoir de carburant atteint le reniflard pendant l'amenée du carburant au réservoir de carburant à travers le tuyau d'entrée tandis que l'organe de vanne est en cours de fermeture,
**caractérisé en ce que**,
après que l'organe de vanne a été fermé pendant la commande de ravitaillement en carburant, l'unité de commande est configurée pour ouvrir l'organe de vanne de façon à libérer la pression interne dans le réservoir de carburant, puis l'unité de commande est configurée pour fermer l'organe de vanne après la libération de la pression interne dans le réservoir de carburant, à la condition que la pression interne dans le réservoir de carburant soit supérieure ou égale à une première valeur prédéterminée (Th1) et qu'en outre une vitesse d'accroissement de la pression interne dans le réservoir de carburant soit inférieure à une deuxième valeur prédéterminée (Th2), et
l'unité de commande étant configurée, après que l'organe de vanne a été fermé pendant la commande de ravitaillement en carburant, pour maintenir un état fermé de l'organe de vanne, à la condition que la pression interne dans le réservoir de carburant soit supérieure ou égale à la première valeur prédéterminée et qu'en outre la vitesse d'accroissement de la pression interne dans le réservoir de carburant soit supérieure ou égale à la deuxième valeur prédéterminée.

2. Dispositif de traitement de carburant évaporé selon la revendication 1,
l'unité de commande étant configurée pour déterminer que la pression interne dans le réservoir de carburant a été libérée lorsque la pression interne dans le réservoir de carburant est réduite de façon à être proche d'une pression atmosphérique en ouvrant l'organe de vanne.

3. Dispositif de traitement de carburant évaporé selon la revendication 1 ou 2,
l'unité de commande étant configurée pour déterminer que la pression interne dans le réservoir de carburant a été libérée lorsqu'un temps d'ouverture de l'organe de vanne est supérieur ou égal à une troisième valeur prédéterminée.
